# EUROPÄISCHE PATENTSCHRIFT

(11) **EP 1 614 621 B1**
(45) Veröffentlichungstag und Bekanntmachung des Hinweises auf die Patenterteilung: **12.05.2010**
(21) Anmeldenummer: 05012951.9
(22) Anmeldetag: 16.06.2005
(51) Int. Cl.: B63H 23/24, B63H 21/17

(54) **Elektrisches Energieversorgungssystem und Betriebsverfahren hierfür**
Electric power supply system and operating method for the same
Système de fournissage d'énergie électrique et méthode d'opération du même

(30) Priorität: 09.07.2004 DE 102004034936
(43) Veröffentlichungstag der Anmeldung: 11.01.2006
(73) Patentinhaber: Converteam GmbH, 12277 Berlin (DE)
(72) Erfinder: Reschberger, Stefan, 10405 Berlin (DE)
(74) Vertreter: Schäfer, Wolfgang

(56) Entgegenhaltungen:
- EP-A- 1 022 218
- WO-A-2004/028899
- WO-A-2004/042887
- DE-A1- 10 128 152

## Beschreibung

Die vorliegende Erfindung betrifft ein elektrisches Energieversorgungssystem für Schiffe, mit mindestens einem Generator und mit Verbrauchern.

Bei herkömmlichen Systemen dieser Art ist eine Drehzahl insbesondere von sogenannten Bordnetzgeneratoren gemäß dem dieselelektrischen Prinzip starr an die Netzfrequenz des Bordnetzes von bspw. 50 Hz bzw. 60 Hz gekoppelt, wobei elektrische Antriebe direkt aus dem Bordnetz oder über dafür vorgesehene Frequenzumrichter gespeist werden.

Die starre Kopplung zwischen der Drehzahl des Bordnetzgenerators und der Netzfrequenz ist hinsichtlich eines optimalen Betriebpunktes des Bordnetzgenerators bzw. einer Flexibilität hinsichtlich der Leistungsaufnahme von Verbrauchern unzureichend.

Ein System nach dem Oberbegriff des Anspruchs 1 ist aus der WO 2004/042887 A bekannt. Durch den dortigen Gleichspannungszwischenkreis ist eine frequenzmäßige Entkopplung zwischen den den Gleichspannungszwischenkreis speisenden Generatoren bzw. den diese Generatoren antreibenden Dieselmotoren oder Gasturbinen einerseits und der Gleichspannung zum Antrieb elektrischer Schiffsantriebe andererseits gegeben. Dadurch können die Generatoren unabhängig von den Schiffsantrieben und dergleichen betrieben werden.

Aufgabe der vorliegenden Erfindung ist es, ein verbessertes elektrisches Energieversorgungssystem und ein Betriebsverfahren hierfür anzugeben, welches eine optimale Ausnutzung der Generatoren und der Schiffsantriebe ermöglicht.

Diese Aufgabe wird bei einem Energieversorgungssystem der eingangs genannten Art erfindungsgemäß durch das Energieversorgungssystem nach Anspruch 1 sowie durch das Betriebsverfahren nach Anspruch 11 gelöst.

Erfindungsgemäß werden als motorische Schiffsantriebe ausgebildete Verbraucher in einem Bremsbetrieb als Generatoren betrieben. Bei dem Bremsbetrieb wird eine mit einer Schiffsschraube verbundene Welle nicht mehr von dem Schiffsantrieb angetrieben. Allerdings ergibt sich aufgrund der Fluidströmungen um die Schiffsschraube ein Drehmoment, das eine weitere Drehung der Welle bewirkt. Dieses Drehmoment wird dazu ausgenutzt, den Schiffsantrieb anzutreiben und damit als Generator zu betreiben, der eine auf diese Weise erhaltene elektrische Energie beispielsweise in den Gleichspannungszwischenkreis speist.

Hierzu ist es besonders vorteilhaft, den üblicherweise als Schiffsantrieb verwendeten Motor über einen Umrichter an den Gleichspannungszwischenkreis anzuschließen. Bei normalem Fahrbetrieb versorgt der Umrichter den Motor aus dem Gleichspannungszwischenkreis mit einer Wechselspannung der erforderlichen Frequenz. Bei dem Bremsbetrieb hingegen wird der Umrichter dazu verwendet, die von dem generatorisch betriebenen Motor erhaltene elektrische Energie in den Gleichspannungszwischenkreis einzuspeisen.

Die aus der Bremsenergie auf diese Weise erhaltene elektrische Energie kann beispielsweise auch dazu benutzt werden, Akkumulatoren oder Kondensatorbänke aufzuladen.

Bei einer vorteilhaften Ausführungsform der Erfindung wird die im Bremsbetrieb erhaltene elektrische Energie dazu benutzt, eine Drehzahl eines Generators zu erhöhen, indem der betreffende Generator über einen Umrichter aus dem Gleichspannungszwischenkreis motorisch betrieben wird. Der Generator wirkt hierbei gleichsam als Schwungmassenspeicher für die im Bremsbetrieb frei werdende Energie.

Vorzugsweise wird die vorstehend beschriebene Drehzahlerhöhung des Generators dann vorgenommen, wenn eine vorgebbare maximale Gleichspannung in dem Gleichspannungszwischenkreis überschritten ist.

Eine weitere vorteilhafte Ausführungsform der vorliegenden Erfindung sieht vor, dass dem Generator ein Gleichrichter zur Speisung des Gleichspannungszwischenkreises zugeordnet ist. Dieser Gleichrichter kann bspw. als Diodenbrücke ausgebildet sein. Alternativ hierzu kann der Gleichrichter auch Leistungshalbleiterbauelemente wie z.B. IGBTs (insulated gate bipolar transistors) aufweisen, die z.B. einen Umrichter bilden.

Ferner ist eine verbesserte Speisung des Gleichspannungszwischenkreises gemäß einer weiteren Ausführungsform der vorliegenden Erfindung dadurch gegeben, dass der Generator mindestens zwei um vorzugsweise dreißig Grad zueinander versetzte Wicklungssysteme aufweist. In diesem Fall kann der Gleichspannungszwischenkreis über eine entsprechende Diodenbrücke zwölfpulsig von dem Generator gespeist werden.

Gemäß einer weiteren vorteilhaften Ausführungsform der vorliegenden Erfindung sind Umrichter zur Versorgung der Verbraucher mit Wechselspannung aus dem Gleichspannungszwischenkreis vorgesehen.

Eine weitere sehr vorteilhafte Ausführungsform der vorliegenden Erfindung schlägt vor, dass eine Brennstoffzelle und/oder ein Akkumulator und/oder weitere Gleichstromquellen bzw. Gleichspannungsquellen in dem Gleichspannungszwischenkreis vorgesehen ist/sind. Diese Gleichstromquellen können einerseits ergänzend zu den Generatoren den Gleichspannungszwischenkreis speisen. Andererseits können die Gleichstromquellen die Gleichspannung in dem Gleichspannungszwischenkreis auch stabilisieren bzw. puffern. Insbesondere hochdynamische Gleichspannungsquellen wie Akkumulatoren oder auch Kondensatorbänke aus hochkapazitiven Kondensatoren finden hierbei Verwendung. Die Akkumulatoren bzw. Kondensatorbänke können auch aus dem Gleichspannungszwischenkreis aufgeladen werden.

Ganz besonders vorteilhaft wird eine Spannung im Gleichspannungszwischenkreis gemäß einer weiteren Variante der vorliegenden Erfindung durch den Generator insbesondere auf einen konstanten Wert geregelt.

Gemäß einer weiteren vorteilhaften Ausführungsform der vorliegenden Erfindung wird der Generator vorzugsweise in Abhängigkeit einer Leistungsaufnahme der Verbraucher von dem Gleichspannungszwischenkreis getrennt bzw. mit diesem verbunden. Im Falle mehrere Generatoren kann auf diese Weise einer der Generatoren außer Betrieb genommen werden, wenn die Verbraucher nur wenig Energie benötigen, und bei einer stärkeren Belastung des Gleichspannungszwischenkreises kann der Generator erneut in Betrieb genommen und an den Gleichspannungszwischenkreis geschaltet werden.

Die Generatoren können beispielsweise mit einer Frequenz betrieben werden, die einen optimalen Wirkungsgrad des jeweiligen Generators ermöglicht. Beispielsweise können unterschiedliche Generatoren auch mit unterschiedlichen Frequenzen betrieben werden.

Insbesondere können die Generatoren und sie antreibende Motoren bzw. Turbinen bei höheren Drehzahlen betrieben werden, als dies bei herkömmlichen Energieversorgungssystemen mit fester Kopplung an das Bordnetz bzw. an die Bordnetzfrequenz üblich ist. Dadurch ist es möglich, bei gleicher Nennleistung deutlich kleinere Generatoren und Motoren bzw. Turbinen zu verwenden.

Weitere Vorteile und Einzelheiten des erfindungsgemäßen Energieversorgungssystems werden in der nachfolgenden Figurenbeschreibung unter Bezugnahme auf die Zeichnungen angegeben, in denen
- Figur 1: ein erstes Ausführungsbeispiel der vorliegenden Erfindung zeigt, und
- Figur 2: ein zweites Ausführungsbeispiel der vorliegenden Erfindung zeigt.

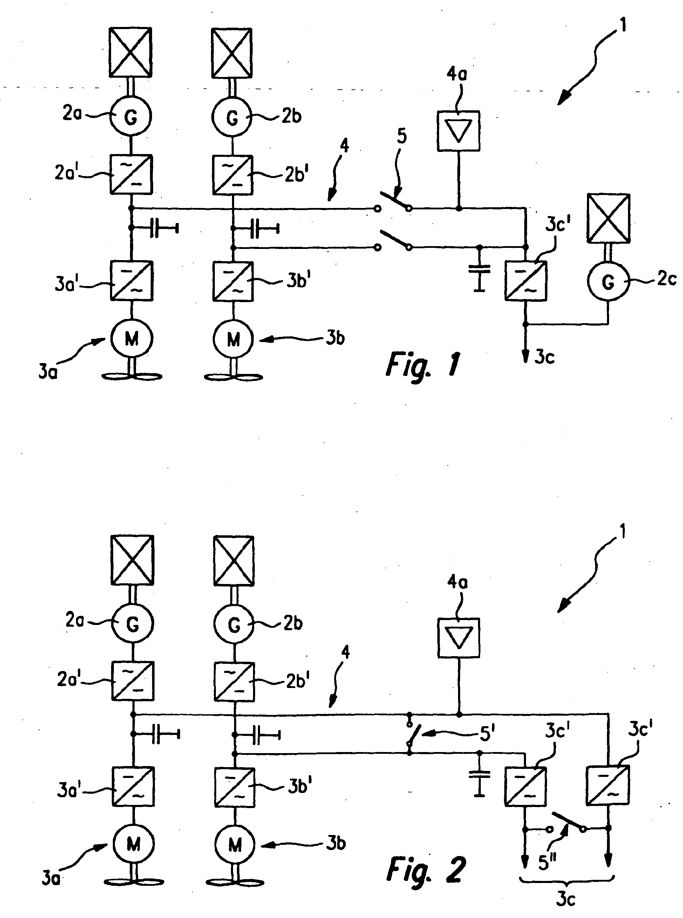

Figur 1 zeigt eine erste Ausführungsform des erfindungsgemäßen Energieversorgungssystems 1, das zum Einsatz auf Schiffen vorgesehen ist. Hierbei speisen bspw. durch aufgeladene Dieselmotoren angetriebene Generatoren 2a, 2b die von ihnen abgegebene elektrische Leistung über als Diodenbrücken ausgebildete Gleichrichter 2a', 2b' in einen Gleichspannungszwischenkreis 4.

Zum Antrieb des Schiffes (nicht gezeigt) sind die Wechselstrommotoren 3a, 3b vorgesehen, welche jeweils über einen ihnen zugeordneten Umrichter 3a' bzw. 3b' aus dem Gleichspannungszwischenkreis 4 mit elektrischer Energie versorgt werden.

Der Gleichspannungszwischenkreis 4 ist, wie aus Figur 1 ersichtlich, durch entsprechend ausgelegte Pufferkondensatoren spannungsstabilisiert. Zur Stabilisierung der Gleichspannung in dem Gleichspannungszwischenkreis können auch Akkumulatoren, besonders vorteilhaft aber hochkapazitive Kondensatoren eingesetzt werden.

Weiterhin verfügt das in Figur 1 abgebildete Energieversorgungssystem 1 über eine Brennstoffzelle 4a, die ebenfalls mit dem Gleichspannungszwischenkreis 4 verbunden ist und neben den Generatoren 2a, 2b zur Versorgung des Gleichspannungszwischenkreises 4 mit elektrischer Energie dient. Insbesondere ist auch die Brennstoffzelle 4a als hochdynamische Gleichspannungsquelle dazu geeignet, vorübergehende Lastschwankungen im Gleichspannungszwischenkreis 4 aufzufangen.

Als Verbraucher ist ein in Fig. 1 durch einen Pfeil angedeutetes Bordnetz 3c an den Gleichspannungszwischenkreis 4 angebunden, das über einen separaten Umrichter 3c' mit einer Wechselspannung der erforderlichen Frequenz, z.B. 50Hz, versorgt wird. Zusätzlich zu der Versorgung des Bordnetzes 3c aus dem Gleichspannungszwischenkreis 4 ist eine direkte Einspeisung elektrischer Energie von dem Generator 2c in das Bordnetz 3c möglich. Durch diesen separaten Generator 2c ist das Bordnetz 3c weitgehend unabhängig von dem Betrieb der primär für den Schiffsantrieb, d.h. die Motoren 3a, 3b, vorgesehenen Generatoren 2a, 2b, so dass ein mit dem Bordnetz 3c verbundener Teil des Gleichspannungszwischenkreises 4 mittels des Schalters 5 vom restlichen Gleichspannungszwischenkreis 4, insbesondere von den Generatoren 2a, 2b trennbar ist. Insgesamt ergibt sich durch die Generatoren 2a, 2b, 2c und die Brennstoffzelle 4a sowie die Pufferkondensatoren eine hochredundante Versorgung des Bordnetzes 3c mit einer dementsprechend hohen Verfügbarkeit.

Im Gegensatz zu den Generatoren 2a, 2b ist es bei dem Generator 2c jedoch erforderlich, ihn mit einer fest an die Frequenz der Wechselspannung des Bordnetzes 3c gekoppelten Frequenz zu betreiben.

Die Generatoren 2a, 2b können jedoch mit einer beliebigen Frequenz betrieben werden, die insbesondere unabhängig ist von einer Frequenz einer Wechselspannung, wie sie von den Verbrauchern 3a, 3b oder auch von dem Bordnetz 3c benötigt wird. Dadurch ist es möglich, die Dieselmotoren, welche die Generatoren 2a, 2b antreiben, bei einer optimalen Drehzahl zu betreiben und damit den Wirkungsgrad des erfindungsgemäßen Energieversorgungssystems 1 zu steigern.

Insbesondere werden die Dieselmotoren und damit auch die Generatoren 2a, 2b auf eine Drehzahl bzw. Frequenz geregelt, die einem optimalen Wirkungsgrad der Dieselmotoren bzw. der Generatoren 2a, 2b entspricht.

Die Erhöhung der Betriebsfrequenz der Generatoren 2a, 2b im Gegensatz zu fest mit Wechselstromfrequenzen für Verbraucher 3a, 3b gekoppelten Generatoren ermöglicht es, die Generatoren 2a, 2b mit geringeren Abmessungen zu fertigen.

Darüber hinaus ermöglicht die variable Betriebsfrequenz der Generatoren 2a, 2b einen optimalen Wirkungsgrad auch bei schwankender Belastung des Gleichspannungszwischenkreises, indem die Betriebsfrequenz entsprechend der Belastung angepasst wird. Darüber hinaus kann ein Getriebe zwischen den Dieselmotoren und den Generatoren 2a, 2b entfallen, wodurch sich insbesondere das Gesamtgewicht des Energieversorgungssystems 1 reduziert.

Ganz besonders vorteilhaft findet eine Regelung der Generatoren 2a, 2b dahingehend statt, dass die im Gleichspannungszwischenkreis 4 anliegende Gleichspannung konstant gehalten wird.

Darüber hinaus ist es möglich, eine die das Energieversorgungssystem 1 betreffende Schalttafel auf dem Schiff kleinbauender zu gestalten.

Gemäß einer weiteren sehr vorteilhaften Ausführungsform der vorliegenden Erfindung ist es möglich, den in Figur 1 dargestellten Generator 2c wegzulassen, und das Bordnetz 3c nur noch aus dem Gleichspannungszwischenkreis 4 zu speisen, wobei je nach Stellung des Schalters 5 die Brennstoffzelle 4a bzw. auch Pufferkondensatoren zur Versorgung des Bordnetzes 3c dienen oder auch die Generatoren 2a, 2b, falls der Schalter 5 geschlossen ist.

In einem Bremsbetrieb werden die Motoren 3a, 3b nicht mehr mit elektrischer Energie aus dem Gleichspannungszwischenkreis 4 versorgt, sondern über ein auf die Schiffsschrauben und damit die Antriebswellen der Motoren 3a, 3b wirkendes Drehmoment angetrieben und damit generatorisch betrieben. Die Umrichter 3a', 3b'. werden in diesem Fall zur Gleichrichtung einer an den Motoren 3a, 3b anliegenden Wechselspannung verwendet, so dass die im Bremsbetrieb anfallende Bremsenergie in den Gleichspannungszwischenkreis 4 gespeist werden kann.

Bei einer weiteren Ausführungsform der vorliegenden Erfindung wird eine Drehzahlerhöhung der Generatoren 2a, 2b vorgenommen, sobald eine Gleichspannung in dem Gleichspannungszwischenkreis 4 einen vorgebbaren Maximalwert überschreitet. Hierzu werden die Generatoren 2a, 2b über in diesem Fall als Umrichter ausgebildete Schaltungen 2a', 2b' aus dem Gleichspannungszwischenkreis 4 mit elektrischer Energie versorgt und damit motorisch betrieben. Aufgrund der Drehzahlerhöhung ergibt sich eine Steigerung der in den Generatoren in Form von Rotationsenergie gespeicherten mechanischen Energie, und eine Stabilisierung der Gleichspannung in dem Gleichspannungszwischenkreis wird erzielt.

Sobald keine Drehzahlerhöhung mehr erforderlich ist, werden die Umrichter 2a', 2b' dazu eingesetzt, eine von den nunmehr generatorisch betriebenen Generatoren abgegebene Wechselspannung gleichzurichten, um damit den Gleichspannungszwischenkreis 4 in oben beschriebener Weise zu speisen.

Fig. 2 zeigt eine Ausführungsform der Erfindung, die ähnlich ausgebildet ist wie in Fig. 1. Als Unterschied zu Fig. 1 ist jedoch für das Bordnetz 3c bei der Ausführungsform nach Fig. 2 kein separater Generator 2c vorgesehen, weil eine Versorgung des Bordnetzes 3c allein aus dem Gleichspannungszwischenkreis 4 bzw. der Brennstoffzelle 4a und ggf. den Pufferkondensatoren erfolgt, wobei Umrichter 3c' die Gleichspannung des Gleichspannungszwischenkreises in eine für den Bordnetzbetrieb erforderliche Wechselspannung z.B. mit einer Frequenz von 50 Hz umwandeln.

Analog zu dem Ausführungsbeispiel nach Fig. 1 ist auch bei dieser Variante eine Drehzahlerhöhung der Generatoren 2a, 2b über die Umrichter 2a', 2b', 3a', 3b' im Bremsbetrieb möglich.

Durch den Schalter 5' bzw. durch Schließen des Schalters 5' ist auch beim Außerbetriebnehmen eines der Generatoren 2a, 2b eine sichere Versorgung des Bordnetzes 3c bzw. der es speisenden Umrichter 3c' mit elektrischer Energie aus dem Gleichstromzwischenkreis 4 möglich. Derselbe Effekt ist erzielbar durch ein Schließen des Schalters 5", wobei allerdings in diesem Fall im Gegensatz zum Schließen des Schalters 5' auch ein Deaktivieren eines der beiden Umrichter 3c' möglich ist.

Generell ist es auch möglich, die elektrische Energie zum Antrieb der Motoren 3a, 3b und/oder für die Versorgung des Bordnetzes 3c über den Gleichspannungszwischenkreis 4 allein durch die Brennstoffzelle 4a bereitzustellen.

Bei einer weiteren sehr vorteilhaften Ausführungsform der vorliegenden Erfindung weisen die Generatoren 2a, 2b zwei um 30° zueinander versetzte Wicklungssystem auf, sodass auch bei einem Einsatz von Diodenbrücken anstelle der Umrichter 2a', 2b' zur Speisung des Gleichspannungszwischenkreises 4 eine besonders gleichmäßige, zwölfpulsige Einspeisung elektrischer Energie in den Gleichspannungszwischenkreis 4 möglich ist.

Durch die Entkopplung einer Betriebsfrequenz der Generatoren 2a, 2b, 2c von einer Bordnetzfrequenz oder dergleichen können die Generatoren mit ihrer Betriebsfrequenz stets auf eine wirkungsgradoptimale Frequenz geregelt werden, die höher ist, beispielsweise etwa 6000 Umdrehungen/Minute, als eine Betriebsfrequenz bei herkömmlichen Systemen nach dem dieselelektrischen Prinzip. Auf diese Weise ist bei gleicher Leistung auch der Einsatz kleinerer Motoren, Turbinen und Generatoren bei höheren Drehzahlen möglich, wodurch sich eine Gewichtsreduktion des Gesamtsystems ergibt.

Durch die Versorgung des Bordnetzes 3c gemäß Fig. 2 kann auch der Generator 2c entfallen, was eine weitere Gewichtsreduktion bewirkt.

## Patentansprüche

1. Elektrisches Energieversorgungssystem (1) für Schiffe, mit mindestens einem Generator (2a, 2b, 2c) und mit Verbrauchern (3a, 3b, 3c), sowie mit einem Gleichspannungszwischenkreis (4) zur Kopplung des Generators (2a, 2b, 2c) mit den Verbrauchern (3a, 3b, 3c), **dadurch gekennzeichnet, dass** als motorische Schiffsantriebe ausgebildete Verbraucher (3a, 3b) in einem Bremsbetrieb als Generatoren betreibbar sind.

2. Energieversorgungssystem (1) nach Anspruch 1, **dadurch gekennzeichnet, dass**, vorzugsweise bei einem Überschreiten einer vorgebbaren maximalen Gleichspannung in dem Gleichspannungszwischenkreis (4), elektrische Energie aus dem Gleichspannungszwischenkreis (4) zur Erhöhung einer Drehzahl der Generatoren (2a, 2b) verwendbar ist.

3. Energieversorgungssystem (1) nach einem der vorstehenden Ansprüche, **dadurch gekennzeichnet, dass** dem Generator (2a, 2b, 2c) ein Gleichrichter (2a', 2b') zur Speisung des Gleichspannungszwischenkreises (4) zugeordnet ist.

4. Energieversorgungssystem (1) nach einem der vorstehenden Ansprüche, **dadurch gekennzeichnet, dass** Umrichter (3a', 3b', 3c') zur Versorgung der Verbraucher (3a, 3b, 3c) mit Wechselspannung vorgesehen sind.

5. Energieversorgungssystem (1) nach einem der vorstehenden Ansprüche, **dadurch gekennzeichnet, dass** eine Brennstoffzelle (4a) und/oder ein Akkumulator und/oder weitere Gleichstromquellen in dem Gleichspannungszwischenkreis (4) vorgesehen ist/sind.

6. Energieversorgungssystem (1) nach einem der vorstehenden Ansprüche, **dadurch gekennzeichnet, dass** der Generator (2a, 2b, 2c) mindestens zwei um vorzugsweise 30° zueinander versetzte Wicklungssysteme aufweist.

7. Energieversorgungssystem (1) nach einem der vorstehenden Ansprüche, **dadurch gekennzeichnet, dass** eine Spannung im Gleichspannungszwischenkreis (4) durch den Generator (2a, 2b) insbesondere auf einen konstanten Wert regelbar ist.

8. Energieversorgungssystem (1) nach einem der vorstehenden Ansprüche, **dadurch gekennzeichnet, dass** der Generator (2a, 2b, 2c) mit einer Frequenz betreibbar ist, die nicht an eine Frequenz eines Verbrauchers (3a, 3b, 3c), insbesondere eines Bordnetzes, gekoppelt ist.

9. Energieversorgungssystem (1) nach Anspruch 7, **dadurch gekennzeichnet, dass** eine Betriebsfrequenz des Generators (2a, 2b, 2c) in Abhängigkeit eines Wirkungsgrads des Generators (2a, 2b, 2c) wählbar ist.

10. Energieversorgungssystem (1) nach einem der vorstehenden Ansprüche, **dadurch gekennzeichnet, dass** der Generator (2a, 2b, 2c), vorzugsweise in Abhängigkeit einer Leistungsaufnahme der Verbraucher (3a, 3b, 3c), von dem Gleichspannungszwischenkreis (4) trennbar bzw. mit diesem verbindbar ist.

11. Betriebsverfahren für ein elektrisches Energieversorgungssystem (1) für Schiffe, mit mindestens einem Generator (2a, 2b, 2c) und mit Verbrauchern (3a, 3b, 3c), wobei elektrische Energie von dem Generator (2a, 2b, 2c) zu den Verbrauchern (3a, 3b, 3c) oder umgekehrt über einen Gleichspannungszwischenkreis (4) ausgetauscht wird, **dadurch gekennzeichnet, dass** als motorische Schiffsantriebe ausgebildete Verbraucher (3a, 3b) in einem Bremsbetrieb als Generatoren betrieben werden.

12. Betriebsverfahren nach Anspruch 11, **dadurch gekennzeichnet, dass**, vorzugsweise bei einem Überschreiten einer vorgebbaren maximalen Gleichspannung in dem Gleichspannungszwischenkreis (4), elektrische Energie aus dem Gleichspannungszwischenkreis (4) zur Erhöhung einer Drehzahl der Generatoren (2a, 2b) verwendet wird.

13. Betriebsverfahren nach einem der Ansprüche 11 oder 12, **dadurch gekennzeichnet, dass** der Generator (2a, 2b, 2c) nicht mit einer Frequenz eines Bordnetzes oder einer an eine Bordnetzfrequenz gekoppelte Frequenz betrieben wird.

14. Betriebsverfahren nach einem der Ansprüche 11 bis 13, **dadurch gekennzeichnet, dass** der Generator (2a, 2b, 2c) mit einer Frequenz betrieben wird, die von einem optimalen Wirkungsgrad des Generators (2a, 2b, 2c) abhängt.

15. Betriebsverfahren nach einem der Ansprüche 11 bis 14, **dadurch gekennzeichnet, dass** der Gleichspannungszwischenkreis (4) gepuffert wird, insbesondere mit Brennstoffzellen und/oder mit vorzugsweise hochdynamischen Gleichspannungsquellen wie Akkumulatoren und/oder Kondensatorbänken.

## Claims

1. Electric power supply system (1) for ships, comprising at least one generator (2a, 2b, 2c) and comprising consumers (3a, 3b, 3c), and comprising a DC voltage intermediate circuit (4) for coupling the generator (2a, 2b, 2c) to the consumers (3a, 3b, 3c), **characterized in that** consumers (3a, 3b) in the form of motor-powered ships drives can be operated in a braking mode as generators.

2. Power supply system (1) according to Claim 1, **characterized in that**, preferably on exceeding a specifiable maximum DC voltage in the DC voltage intermediate circuit (4), electric power from the DC voltage intermediate circuit (4) can be used for increasing a speed of the generators (2a, 2b).

3. Power supply system (1) according to either of the preceding claims, **characterized in that** a rectifier (2a', 2b') for feeding the DC voltage intermediate circuit (4) is coordinated with the generator (2a, 2b, 2c).

4. Power supply system (1) according to any of the preceding claims, **characterized in that** convertors (3a', 3b', 3c') for supplying the consumers (3a, 3b, 3c) are provided with AC voltage.

5. Power supply system (1) according to any of the preceding claims, **characterized in that** a fuel cell (4a) and/or an accumulator and/or further direct current sources is/are provided in the DC voltage intermediate circuit (4).

6. Power supply system (1) according to any of the preceding claims, **characterized in that** the generator (2a, 2b, 2c) has at least two winding systems offset preferably by 30° relative to one another.

7. Power supply system (1) according to any of the preceding claims, **characterized in that** a voltage in the DC voltage intermediate circuit (4) can be regulated by the generator (2a, 2b) in particular to a constant value.

8. Power supply system (1) according to any of the preceding claims, **characterized in that** the generator (2a, 2b, 2c) can be operated with a frequency which is not coupled to a frequency of a consumer (3a, 3b, 3c), in particular an on-board supply system.

9. Power supply system (1) according to Claim 7,
**characterized in that** an operating frequency of the generator (2a, 2b, 2c) can be chosen as a function of an efficiency of the generator (2a, 2b, 2c).

10. Power supply system (1) according to any of the preceding claims, **characterized in that**, preferably as a function of a power consumption of the consumers (3a, 3b, 3c), the generator can be disconnected from the DC voltage intermediate circuit (4) or can be connected to it.

11. Operating method for an electric power supply system (1) for ships, comprising at least one generator (2a, 2b, 2c) and comprising consumers (3a, 3b, 3c), electric power being exchanged from the generator (2a, 2b, 2c) to the consumers (3a, 3b, 3c) or vice versa via a DC voltage intermediate circuit (4), **characterized in that** consumers (3a, 3b) in the form of motor-powered ships drives are operated in a braking mode as generators.

12. Operating method according to Claim 11, **characterized in that**, preferably on exceeding a specifiable maximum DC voltage in the DC voltage intermediate circuit (4), electric power from the DC voltage intermediate circuit (4) is used for increasing a speed of the generators (2a, 2b).

13. Operating method according to any of Claims 11 or 12, **characterized in that** the generator (2a, 2b, 2c) is not operated with a frequency of an on-board supply system or with a frequency coupled to an on-board supply system frequency.

14. Operating method according to any of Claims 11 to 13, **characterized in that** the generator (2a, 2b, 2c) is operated with a frequency which is dependent on an optimal efficiency of the generator (2a, 2b, 2c).

15. Operating method according to any of Claims 11 to 14, **characterized in that** the DC voltage intermediate circuit (4) is buffered, in particular with fuel cells and/or with preferably highly dynamic DC voltage sources, such as accumulators and/or capacitor banks.

## Revendications

1. Système d'alimentation en énergie électrique (1) pour navires comportant au moins un générateur (2a, 2b, 2c) et des récepteurs (3a, 3b, 3c), ainsi qu'un circuit intermédiaire à tension continue (4) pour raccorder le générateur (2a, 2b, 2c) aux récepteurs (3a, 3b, 3c), **caractérisé en ce que** des récepteurs (3a, 3b) conçus sous la forme de dispositifs de propulsion motorisée de navire peuvent être utilisés comme générateurs lors du freinage.

2. Système d'alimentation en énergie (1) selon la revendication 1, **caractérisé en ce que**, de préférence en cas de dépassement d'une tension continue maximale prédéfinissable dans le circuit intermédiaire à tension continue (4), de l'énergie électrique provenant du circuit intermédiaire à tension continue (4) peut être utilisée pour augmenter un régime des générateurs (2a, 2b).

3. Système d'alimentation en énergie (1) selon l'une quelconque des revendications précédentes, **caractérisé en ce qu'**un redresseur (2a', 2b') est associé au générateur (2a, 2b, 2c) pour alimenter le circuit intermédiaire à tension continue (4).

4. Système d'alimentation en énergie (1) selon l'une quelconque des revendications précédentes, **caractérisé en ce que** des onduleurs (3a', 3b', 3c') sont prévus pour alimenter les récepteurs (3a, 3b, 3c) en tension alternative.

5. Système d'alimentation en énergie (1) selon l'une quelconque des revendications précédentes, **caractérisé en ce qu'**une cellule de carburant (4a) et/ou un accumulateur et/ou d'autres sources de courant continu est/sont prévu(s) dans le circuit intermédiaire à tension continue (4).

6. Système d'alimentation en énergie (1) selon l'une quelconque des revendications précédentes, **caractérisé en ce que** le générateur (2a, 2b, 2c) comporte au moins deux systèmes d'enroulements déphasés de préférence de 30° l'un par rapport à l'autre.

7. Système d'alimentation en énergie (1) selon l'une quelconque des revendications précédentes, **caractérisé en ce qu'**une tension dans le circuit intermédiaire à tension continue (4) est régulable notamment à une valeur constante par le générateur (2a, 2b).

8. Système d'alimentation en énergie (1) selon l'une quelconque des revendications précédentes, **caractérisé en ce que** le générateur (2a, 2b, 2c) est exploitable à une fréquence qui n'est pas couplée à une fréquence d'un récepteur (3a, 3b, 3c), notamment d'un réseau d'alimentation de bord.

9. Système d'alimentation en énergie (1) selon la revendication 7, **caractérisé en ce qu'**une fréquence de service du générateur (2a, 2b, 2c) peut être sélectionnée en fonction d'un rendement du générateur (2a, 2b, 2c).

10. Système d'alimentation en énergie (1) selon l'une quelconque des revendications précédentes, **caractérisé en ce que** le générateur (2a, 2b, 2c) peut être déconnecté du circuit intermédiaire à tension continue (4) ou relié à celui-ci de préférence en fonction de la puissance absorbée par les récepteurs (3a, 3b, 3c).

11. Procédé d'exploitation d'un système d'alimentation en énergie électrique (1) pour navires comportant au moins un générateur (2a, 2b, 2c) et des récepteurs (3a, 3b, 3c), l'énergie électrique étant transmise du générateur (2a, 2b, 2c) aux récepteurs (3a, 3b, 3c) ou inversement par le biais d'un circuit intermédiaire à tension continue (4), **caractérisé en ce que** les récepteurs (3a, 3b) conçus comme des dispositifs de propulsion motorisée de navire sont utilisés comme des générateurs lors du freinage.

12. Procédé d'exploitation selon la revendication 11, **caractérisé en ce que**, de préférence en cas de dépassement d'une tension continue maximale prédéfinissable dans le circuit intermédiaire à tension continue (4), de l'énergie électrique provenant du circuit intermédiaire à tension continue (4) est utilisée pour augmenter un régime des générateurs (2a, 2b).

13. Procédé d'exploitation selon la revendication 11 ou la revendication 12, **caractérisé en ce que** le générateur (2a, 2b, 2c) n'est pas exploité à une fréquence d'un réseau d'alimentation de bord ou une fréquence couplée à une fréquence d'un réseau d'alimentation de bord.

14. Procédé d'exploitation selon l'une quelconque des revendications 11 à 13, **caractérisé en ce que** le générateur (2a, 2b, 2c) est exploité à une fréquence qui dépend d'un rendement optimal du générateur (2a, 2b, 2c).

15. Procédé d'exploitation selon l'une quelconque des revendications 11 à 14, **caractérisé en ce que** le circuit intermédiaire à tension continue (4) fonctionne comme tampon, notamment avec des cellules de carburant et/ou avec des sources de tension continue de préférence très dynamiques, comme des accumulateurs et/ou des batteries de condensateurs.
